# EUROPEAN PATENT APPLICATION

(11) **EP 1 464 549 A1**
(43) Date of publication of application: **06.10.2004**
(21) Application number: 03252170.0
(22) Date of filing: 04.04.2003
(51) Int. Cl.: B60R 21/16

(54) **Improvements in or relating to an air-bag**

(71) Applicant: AUTOLIV DEVELOPMENT AKTIEBOLAG, 447 83 Vargarda (SE)
(72) Inventor: Moore, Johnathan, Farnham, Surrey GU10 4DD (GB); Green, Christopher, Ceredigion, SY25 6JG (GB)
(74) Representative: Frankland, Nigel Howard

(57) **Abstract**

An air-bag is disclosed which takes the form of an inflatable curtain (1). The inflatable curtain has a plurality of mounting tabs (16) provided at positions spaced along the upper edge of the inflatable curtain. Each mounting tab (16) is formed of fabric and has a region, spaced from the upper edge (9) of the inflatable curtain (1), where there are a plurality of interconnected layers of fabric. Each mounting tab has a further region located adjacent said upper edge (9) in which the tab (16) forms a projecting lug (18). Also disclosed is a method of mounting an air-bag of this type to a motor vehicle. The method comprises the steps of inserting each tab (16) of the air-bag (1) through a respective aperture (22) formed in part (21) of the motor vehicle, and engaging the lug of each tab (16) with the rear side of the aperture (22).

## Description

**THE PRESENT INVENTION** relates to an air-bag, and more particularly relates to an air-bag in the form of an inflatable curtain.

It has been proposed previously to provide a motor vehicle with an air-bag in the form of an inflatable curtain which, when inflated, occupies a position adjacent the head of an occupant of a vehicle, between the occupant of a vehicle and the adjacent window.

A typical inflatable curtain of this type is provided with a plurality of mounting tabs extending along its upper edge, the mounting tabs being connected to the roof of the vehicle by means of screws, clips or other mechanical devices. It is therefore necessary to ensure that each tab has sufficient strength to withstand forces that will be applied to it on deployment of the inflatable curtain. Also there may be a considerable amount of production time required to assemble the relevant components and actually mount the inflatable curtain in a motor vehicle.

The present invention seeks to provide an improved air-bag.

According to the present invention, there is provided an air-bag in the form of an inflatable curtain, the inflatable curtain having a plurality of mounting tabs provided at positions spaced along the upper edge of the inflatable curtain, each mounting tab being formed of fabric and having a region, spaced from said upper edge, where there are a plurality of layers of interconnected fabric, and having a further region located adjacent said upper edge in which the tab forms a projecting lug.

Preferably, each projecting lug is formed of two super-imposed layers of fabric.

Advantageously, each tab is formed from a flap formed integrally with the air-bag.

Conveniently, each tab is formed from a folded flap which is folded about two adjacent fold-lines so that three regions of the flap are superimposed, part of the super-imposed regions spaced from the upper edge being interconnected.

Preferably, each flap initially extends away from the upper edge of the air-bag.

Advantageously, each flap extends substantially parallel with the upper edge of the air-bag.

Conveniently, each tab is formed at least partially from an element connected to the rest of the air-bag.

Preferably, the upper edge of the air-bag defines a plurality of flaps, and a folded component of fabric is secured to each flap.

Advantageously, each tab is in the form of a tab forming element, the tab forming element being secured to the air-bag.

According to another aspect of the present invention, there is provided a method of mounting an air-bag as defined above to a motor vehicle, the method comprising the steps of inserting each tab of the air-bag through a respective aperture formed in part of the motor vehicle and engaging the lug of each tab with the rear side of the respective aperture.

### Preferably, the method further includes

Preferably, the step of inserting, into each aperture, a respective locking plate, each said locking plate having snap-fastenings to snap-fasten the locking plate to the respective aperture.

In order that the invention may be more readily understood, and so that further features thereof may be appreciated, embodiments of the invention will now be described, by way of example, with reference to the accompanying drawings in which:
FIGURE 1 is a diagrammatic view of a typical inflatable curtain,
FIGURE 2 is an enlarged view of part of the curtain of Figure 1 illustrating one tab-forming strip,
FIGURE 3 is a view corresponding to Figure 2 showing the tab forming strip folded and stitched to form a tab,
FIGURE 4 is a view illustrating the inflatable curtain provided with a tab as described with reference to Figures 2 and 3 being mounted on part of a motor vehicle,
FIGURE 5 is a sectional view through part of the vehicle and air-bag as shown in Figure 4 with the air-bag mounted in position,
FIGURE 6 is a view corresponding to Figure 4 illustrating the insertion of a cover plate,
FIGURE 7 is a sectional view corresponding to part of Figure 5 illustrating the cover plate mounted in position,
FIGURE 8 is a view corresponding to Figure 2 illustrating a modified embodiment of the invention,
FIGURE 9 is a view showing the embodiment of Figure 8 after a tab has been folded and stitched,
FIGURE 10 is a view illustrating components of a further embodiment of the invention,
FIGURE 11 is the view of a tab formed from the component shown in Figure 10,
FIGURE 12 is a view showing components for forming a further embodiment of the invention, and
FIGURE 13 is a view showing a tab formed from the components illustrated in Figure 12.

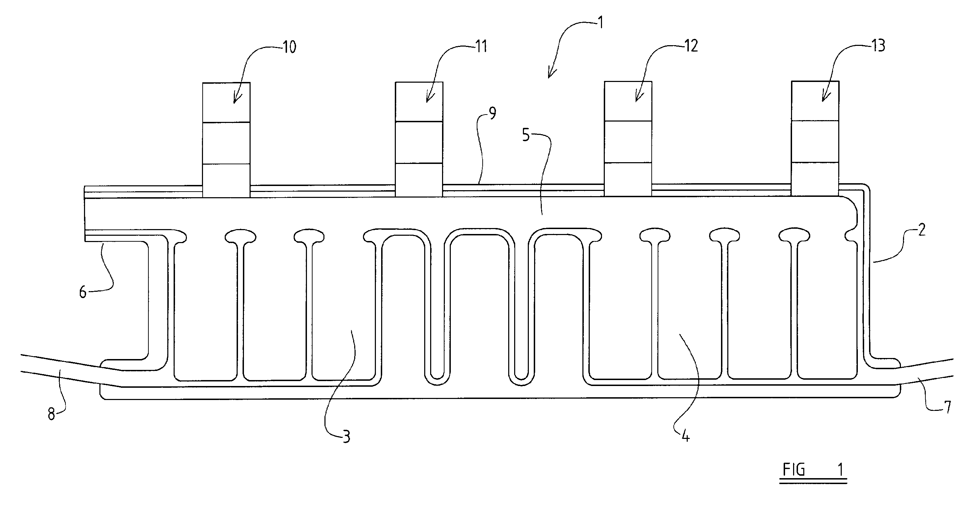

Referring initially to Figure 1 of the accompanying drawings, an air-bag in the form of an inflatable curtain 1 is illustrated. The inflatable curtain has a main rectangular region 2 divided into a first inflatable region 3 and a second inflatable region 4. Each inflatable region 3,4 incorporates a plurality of cells. A gas flow duct 5 extends across the upper part of the inflatable curtain, extending to a projecting gas supply tube 6 which is adapted to be connected to a gas generator. A first strap 7 extends forwardly from a forward lower-most part of the rectangular region 2, and a second strap 8 extends rearwardly from the rear lower-most edge of the rectangular region 2. The straps are intended to extend to appropriately positioned anchoring points. The upper edge 9 of the inflatable region is provided with a plurality of projecting flaps 10, 11, 12, 13 which are provided to form mounting tabs as will be described hereinafter.

Turning now to Figure 2, part of the upper edge 9 of the inflatable curtain is illustrated together with one projecting flap 10. The flap 10 is initially folded about a first fold-line 14 located approximately one-third of the way along the length of the flap to form two super-imposed flap regions, and the two super-imposed flap regions are then folded again about a second fold-line 15 located two-thirds of the way along the flap, thus forming a tab 16 of three super-imposed regions of flap. The end part of the tab 16 located furthest from the upper edge 9 of the inflatable region 2 is then stitched with a stitching pattern 17. The upper part of the tab 16 is thus constituted by three superimposed layers of the flap 10 which are stitched together, whilst the tab presents an outwardly directed lug 18 which is not stitched. The lug 18 may thus be brought into position adjacent the base of the flap 10, or may be moved to project outwardly from the base of the flap 10.

Each of the flaps 10, 11, 12, 13 will be folded and stitched in the same way.

The air-bag 1, when packed, may be located within a package 20 with the resultant tabs projecting from the package, such as the tab 16 as shown in Figure 4.

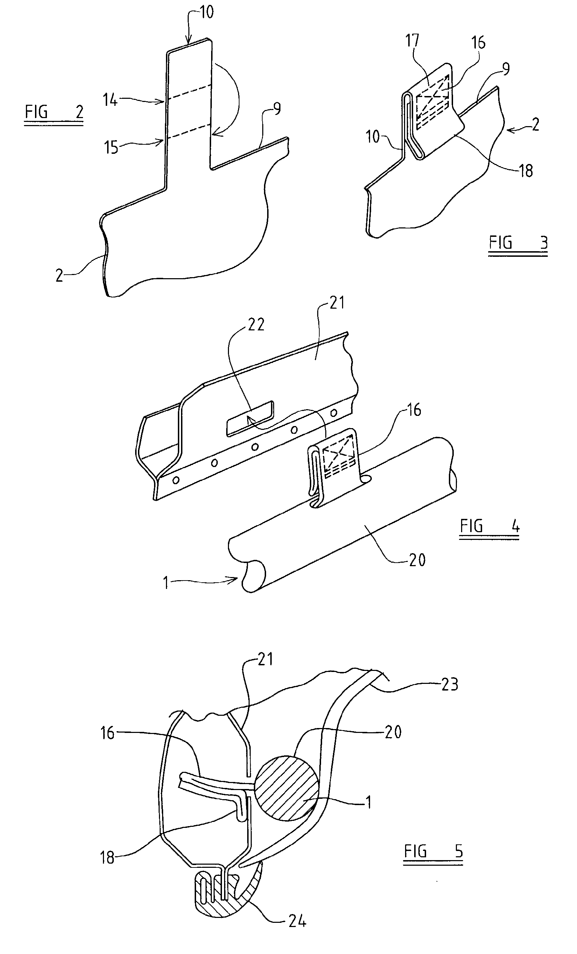

It is to be understood that a vehicle to which the air-bag is to be mounted is provided with a roof-forming part 21 which is provided with a plurality of evenly spaced rectangular holes 22, only one of which is shown in Figure 4. The tab 16 may be inserted through the rectangular aperture 22 and may be inserted fully into the space behind the roof-forming part 21, at which point the lug 18 will tend to spring outwardly, as shown in Figure 5, thus preventing withdrawal of the tab 16 from the part 21. The air-bag within its package 20 is thus held firmly in position adjacent the part 21. A roof trim 23 may be mounted in position to mask the package 20, and a further trim element 24 may be mounted in position on the part 21 if desired.

As the aperture 22 has a dimension sufficiently large to receive three folded layers of fabric defining the tab 16, when the tab has been inserted in position as described, only one layer of fabric is present within the aperture 22. Thus a locking plate 25 may be provided, the panel 25 having, on its rear surface, snap-acting lugs 26, the lugs being adapted to flex inwardly as they are inserted through the aperture 22, and then to snap outwardly so that the lugs 26 engage the rear surface of the roof-forming part 21 adjacent the aperture 22 preventing the locking panel from being removed from the aperture 22. Thus the tab 16 is securely locked in position relative to the roof-forming part 21.

It is to be appreciated that an air-bag, as described, may easily be mounted in a motor vehicle provided with appropriate apertures 22 simply by inserting the above-described tabs 16 in position through respective apertures 22 and then by inserting the locking plates 25 in position. No complicated clips or clamps are utilised.

Whilst one technique of forming a mounting tab with a protruding lug has been described, alternative techniques may be adopted, as will now be described.

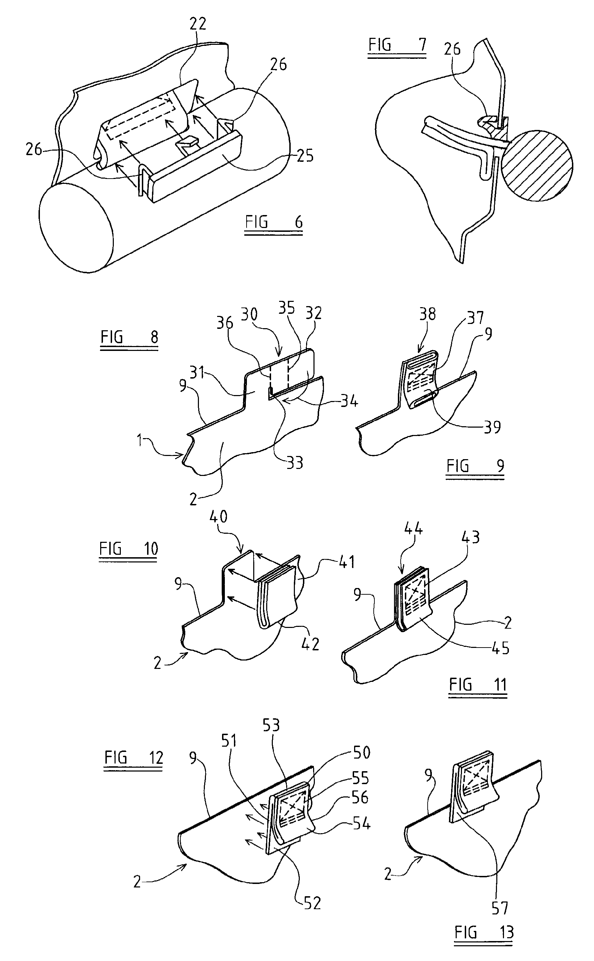

Turning now to Figure 8, the upper edge 9 of a modified form of air-bag 1 is illustrated in which the upper edge is provided with a plurality of flaps (only one, 30, of which is shown) each of which have an initial region 31 which extends perpendicularly from the edge 9 of the inflatable part 2 of the air-bag, the initial region 31 carrying a laterally extending region 32 which extends substantially parallel with the upper edge 9 of the air-bag. An "L"-shaped slot 33 separates the extending region 32 from the initial region 31. The extending region 32 is initially folded, as shown by arrow 34, about a first fold-line 35 which extends perpendicularly to the edge 9 to form two super-imposed regions of the flap 30. The two super-imposed regions of the flap 30 are then folded about a second fold-line 36, which is coincident with the inner-most end of the "L"-shaped slot 33, so that the two super-imposed parts of the flap lie adjacent the initial region 31 of the flap to create three superimposed layers of the flap. Stitching 37 is then applied to a region of the three super-imposed layers of the flap 30 furthest from the edge 9 to form a tab 38, the tab having, at its end adjacent the upper edge 9, a protruding lug 39 which is equivalent to the lug 18 as shown in Figure 3.

It is to be appreciated that an air-bag provided with a plurality of lugs 37, as described with reference to Figures 8 and 9, may be utilised in the same way as the air-bag described with reference to Figures 2 and 3.

Figure 10 illustrates a further modified embodiment of the invention in which the upper edge 9 of the inflatable region 2 of an air-bag is provided with a plurality of upstanding flaps, only one of which, 40, is shown. A separate piece of fabric 41, which is folded about a single fold-line 42, to have a size and configuration equivalent to that of the flap 40, is then brought into alignment with the flap 40 and is stitched to the flap 40 by stitching 43 (Figure 11) at a position spaced from the upper edge 9 of the inflatable region 2 of the air-bag to form a mounting tab 44. The part of the tab 44 located closest to the upper edge 9 is in the form of a protruding lug 45 equivalent to the lug 18 as described with reference to Figures 2 and 3.

In a further embodiment of the invention, as shown in Figures 12 and 13, the upper edge 9 of the inflatable region 2 of the air-bag is not provided with any flaps, but a separate tab element 50 is provided which is simply stitched to the upper edge 9 of the air-bag. The tab element 50 is formed from a single piece of fabric in the form of an elongate strip. The strip of fabric is folded to form a rear layer of fabric 51 which has an exposed lower mounting region 52. The strip of fabric is folded about a fold-line 53 located at the top of the tab element to form an intermediate layer which extends downwardly to a lower fold-line 54 which separates the intermediate region from a terminal region which extends upwardly adjacent the intermediate region and which terminates adjacent the fold-line 53. Stitching 55 is provided in the region adjacent the fold-line 53 to interconnect the three adjacent and super-imposed layers of the strip. The stitching is such that a projecting lug 56 is provided extending from the stitching 55 to the fold-line 54. The lug 56 is equivalent to the lug 18 described with reference to Figures 2 and 3. The tab element 50 may be stitched to the upper edge 9 of the inflatable part 2 of the inflatable element by means of stitching 57 as shown in Figure 13.

It is to be appreciated that the embodiments described with reference to Figures 10 to 13 may be connected to the motor vehicle in a manner equivalent to that described above with reference to the embodiment of Figures 2 and 3.

It should also be appreciated that whilst each of the above-described embodiments comprises mounting tabs having three superimposed layers of fabric, it is possible to provide more than three layers of fabric. For example, in the arrangements described above with reference to Figures 2 to 6, 8,9 and 12,13, each flap could be folded about three fold lines instead of two, so as to provide four superimposed layers of fabric.

In the present Specification "comprises" means "includes or consists of" and "comprising" means "including or consisting of".

The features disclosed in the foregoing description, or the following Claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An air-bag in the form of an inflatable curtain, the inflatable curtain having a plurality of mounting tabs provided at positions spaced along the upper edge of the inflatable curtain, each mounting tab being formed of fabric and having a region, spaced from said upper edge, where there are a plurality of layers of interconnected fabric, and having a further region located adjacent said upper edge in which the tab forms a projecting lug.

2. An air-bag according to Claim 1 wherein each projecting lug is formed of two super-imposed layers of fabric.

3. An air-bag according to any one of the preceding Claims wherein each tab is formed from a flap formed integrally with the air-bag.

4. An air-bag according to Claim 3 wherein each tab is formed from a folded flap which is folded about two adjacent fold-lines so that three regions of the flap are super-imposed, part of the super-imposed regions spaced from the upper edge being interconnected.

5. An air-bag according to Claim 3 or Claim 4 wherein each flap initially extends away from the upper edge of the air-bag.

6. An air-bag according to Claim 3 or Claim 4 wherein the flap initially extends substantially parallel with the upper edge of the air-bag.

7. An air-bag according to any one of Claims 1 to 4 wherein each tab is formed at least partially from an element connected to the rest of the air-bag.

8. An air-bag according to Claim 7 wherein the upper edge of the air-bag defines a plurality of flaps, and a folded component of fabric is secured to each flap.

9. An air-bag according to Claim 7 wherein each tab is in the form of a tab forming element, the tab forming element being secured to the air-bag.

10. A method of mounting an air-bag according to any one of the preceding Claims to a motor vehicle, the method comprising the steps of inserting each tab of the air-bag through a respective aperture formed in part of the motor vehicle and engaging the lug of each tab with the rear side of the respective aperture.

11. A method according to Claim 10 including the step of inserting, into each aperture, a respective locking plate, each said locking plate having snap-fastenings to snap-fasten the locking plate to the respective aperture.

## Amended claims

### Amended claims in accordance with Rule 86(2) EPC.

**1.** An air-bag in the form of an inflatable curtain (1), the inflatable curtain (1) having a plurality of mounting tabs (16, 38) provided at positions spaced along the upper edge (9) of the inflatable curtain (1), each mounting tab (16, 38) being formed of fabric and having a region, spaced from said upper edge, where there are a plurality of layers of interconnected fabric, **characterised in that** each mounting tab (16, 38) has a further region (18, 39) located adjacent said upper edge (9) in which the tab (16, 38) forms a lug (18, 39) projecting outwardly from the tab (16, 38).

**2.** An air-bag according to Claim 1 wherein each projecting lug (18, 39) is formed of two super-imposed layers of fabric.

**3.** An air-bag according to any one of the preceding Claims wherein each tab (16, 38) is formed from a flap (10, 30) formed integrally with the air-bag.

**4.** An air-bag according to Claim 3 wherein each tab (16, 38) is formed from a folded flap (10, 30) which is folded about two adjacent fold-lines (14, 15, 35, 36) so that three regions of the flap are super-imposed, part of the super-imposed regions spaced from the upper edge (9) being interconnected.

**5.** An air-bag according to Claim 3 or Claim 4 wherein each flap (10) initially extends away from the upper edge (9) of the air-bag.

**6.** An air-bag according to Claim 3 or Claim 4 wherein the flap (30) initially extends substantially parallel with the upper edge (9) of the air-bag.

**7.** An air-bag according to any one of Claims 1 to 4 wherein each tab (16) is formed at least partially from an element (41) connected to the rest of the air-bag.

**8.** An air-bag according to Claim 7 wherein the upper edge (9) of the air-bag defines a plurality of flaps (40), and a folded component of fabric (41) is secured to each flap (40).

**9.** An air-bag according to Claim 7 wherein each tab is in the form of a tab forming element (50), the tab forming element (50) being secured to the air-bag.

**10.** A method of mounting an air-bag according to any one of the preceding Claims to a motor vehicle, the method comprising the steps of inserting each tab (16, 38) of the air-bag through a respective aperture (22) formed in part of the motor vehicle and engaging the lug (18, 39) of each tab with the rear side of the respective aperture (22).

**11.** A method according to Claim 10 including the step of inserting, into each aperture (22), a respective locking plate (25), each said locking plate having snap-fastenings to snap-fasten the locking plate (25) to the respective aperture (22).
